# FASCICULE DE BREVET EUROPEEN

(11) **EP 0 953 484 B1**
(45) Date de publication et mention de la délivrance du brevet: **05.03.2003**
(21) Numéro de dépôt: 99400913.2
(22) Date de dépôt: 14.04.1999
(51) Int. Cl.: B60R 21/20, B60R 21/22

(54) **Dispositif de montage d'un module à sac gonflable latéral pour siège avant d'un véhicule automobile**
Seitenairbagmodul- Montagevorrichtung für einen Vordersitz eines Kraftfahrzeuges
Side airbag module mounting device for a front seat of a motor vehicle

(30) Priorité: 30.04.1998 FR 9805570
(43) Date de publication de la demande: 03.11.1999
(73) Titulaire: AUTOMOBILES PEUGEOT, 75116 Paris (FR); AUTOMOBILES CITROEN, 92200 Neuilly-sur-Seine (FR)
(72) Inventeur: Le Donge, Pierre, 94550 Chevilly-Larue (FR)
(74) Mandataire: Armengaud Ainé, Alain

(56) Documents cités:
- DE-A- 3 439 076
- DE-A- 19 632 586
- DE-A- 19 642 938
- US-A- 5 683 101
- US-A- 5 816 660

## Description

La présente invention est relative à un dispositif de montage d'un module contenant un sac gonflable, généralement désigné sous la dénomination "Air-bag", équipant un véhicule automobile et destiné, lors d'un choc violent pouvant se produire à l'occasion d'un accident grave, à libérer brutalement ce sac immédiatement rempli d'une pression d'air ou d'un gaz approprié de manière à former, au voisinage du conducteur ou d'un passager de ce véhicule, entre celui-ci et une paroi en regard de l'habitacle, un coussin pneumatique évitant un contact direct avec cette paroi, pour réduire les risques de blessures ou de traumatismes pouvant en résulter.

L'invention concerne plus particulièrement un dispositif de ce genre propre à être monté sur l'un ou l'autre, de préférence les deux sièges avant du véhicule, occupés respectivement par le conducteur et le passager, la libération du sac gonflable réalisant l'expansion du coussin amortisseur dans la région latérale de l'habitacle, plus spécialement pour protéger ces personnes vis-à-vis d'une déformation vers l'intérieur des tôles de celui-ci, en cas de choc se produisant sur le côté du véhicule.

De façon relativement usuelle pour ce type de dispositif de protection, le module contenant le sac gonflable et les moyens propres à permettre sa soudaine expansion en cas de besoin sont logés dans le montant latéral du dossier du siège réservé soit au conducteur, soit au passager à l'avant du véhicule, du côté droit ou gauche de ce siège selon le type de conduite adopté avec ce véhicule.

Plus particulièrement, il est habituel de constituer ce dossier à l'aide d'une armature rigide, de préférence métallique, entourée par une épaisseur appropriée d'un matériau conférant au siège un confort convenable, en constituant une matelassure suffisamment souple et apte à soutenir dans de bonnes conditions le dos de l'usager, cette matelassure étant solidarisée avec l'armature de support rigide et usuellement recouverte vers l'extérieur d'une coiffe ou habillage similaire.

Dans l'épaisseur de la matelassure est ménagé, sur le côté du siège où doit être monté le sac gonflable, un logement propre à recevoir le module correspondant, lequel est introduit dans ce logement, ouvert vers l'extérieur, après avoir découpé la coiffe externe selon la périphérie du logement, lequel présente un profil qui correspond le plus étroitement possible au contour extérieur du module qui s'adapte ainsi directement sur le dossier du siège.

Selon le cas, la finition du montage et en particulier l'immobilisation du module dans son logement, à l'intérieur de la matelassure du dossier du siège, nécessite le montage derrière celui-ci d'une plaque rigide de fixation, ceci pour permettre un entourage complet de l'ouverture du logement par la coiffe et par cette plaque.

En variante, on peut prévoir de fixer à la matelassure, dans le logement de réception du sac gonflable, une pièce injectée ou autre, en forme de cuvette, comportant un bord ou une collerette externe qui délimite ou vient recouvrir le bord de la coiffe au droit du logement, le module étant monté dans cette cuvette laquelle est immobilisée, notamment par son fond à l'opposé de la coiffe, contre l'armature de support du siège.

Ces solutions sont relativement coûteuses, surtout la seconde, tandis que la première présente l'inconvénient que rien ne s'oppose en principe à l'intrusion d'un objet ou des doigts d'un utilisateur ou d'un tiers, par exemple d'un enfant, dans le logement de réception, derrière la partie supérieure du module au niveau de la coiffe, cette intrusion pouvant perturber, voire empêcher, le gonflement ultérieur du sac en cas d'urgence, avec les risques que ceci comporte pour la sécurité du conducteur ou des passagers.

Le DE-A 196 32 586 comportant les caractéristiques du préambule de la revendication 1 illustre un dispositif de montage d'un module à sac gonflable latéral pour un siège de véhicule automobile, dans lequel la coiffe est emprisonnée entre une pièce qui se trouve sur la coiffe, donc à l'extérieur du siège, cette pièce étant montée sur une collerette du module pour exercer seulement un appui élastique sur la coiffe.

Cette réalisation est peu pratique et n'évite pas les inconvénients déjà cités, les moyens de fixation du module à sac gonfable étant apparents à l'extérieur de la coiffe.

La présente invention a pour objet un dispositif de montage d'un module à sac gonflable, notamment dans le montant latéral du dossier d'un siège avant d'un véhicule automobile, à l'intérieur d'un logement de réception ouvert ménagé dans une épaisseur de matelassure de ce dossier, cette matelassure étant recouverte d'une coiffe externe de protection, le logement communiquant avec l'extérieur du dossier par une ouverture ménagée dans la coiffe, ce dispositif comportant une couronne de support en forme de bride, entourant le logement de réception et apte à être montée sous la coiffe.

Selon l'invention, ce dispositif se caractérise en ce la coiffe est solidarisée avec la couronne de support par des moyens de liaison appropriés, le module comportant une collerette externe venant directement s'appliquer contre la couronne en emprisonnant la coiffe au droit de son ouverture.

Grâce à ces dispositions, en particulier au montage sous la coiffe, autour de son ouverture prolongeant le logement de réception du module, d'une couronne rigide en forme de bride, immobilisée vis-à-vis de la matelassure du dossier, et au recouvrement de cette couronne par la collerette du module qui emprisonne entre elle et la bride le bord de la coiffe, il est impossible pour un usager d'introduire ses doigts ou un objet quelconque depuis l'extérieur du dossier du siège jusque dans le logement où est disposé le module, ce qui assure de façon très simple et peu coûteuse la sécurité recherchée.

Selon diverses variantes, les moyens de liaison entre la coiffe et la couronne de support peuvent être réalisés sous la forme d'une couture, d'un agrafage par clips ou éléments de jonction analogues, par soudure, par vissage ou équivalents.

Dans tous les cas, le matériau de la couronne présente une rigidité suffisante pour ne pas se déformer de façon excessive au montage, tout en permettant une finition convenable avec la matelassure, avant recouvrement par la coiffe externe.

En particulier, mais de façon non exclusive, la couronne peut être réalisée en carton comprenant ou non un élément de raidissement interne améliorant sa rigidité, ou encore sous la forme d'une pièce en matière plastique.

Selon une autre caractéristique, l'effet anti-intrusion dans le logement de réception du module peut être amélioré grâce au montage sous la couronne en forme de bride, à l'intérieur du logement dans la paroi latérale de celui-ci, d'une bague jouant le rôle d'une cale d'appui, placée dans la matelassure entre la couronne et l'armature du dossier du siège.

En variante, le module disposé dans son logement peut comporter dans sa surface latérale des ergots en saillie vers l'extérieur, propres à venir se disposer sous la couronne en forme de bride, en plaquant la bride et la coiffe contre la collerette du module.

D'autres caractéristiques d'un dispositif de montage d'un module à sac gonflable, établi conformément à l'invention, apparaîtront encore à travers la description qui suit de plusieurs exemples de réalisation, donnés à titre indicatif et non limitatif, en référence aux dessins annexés sur lesquels :
- La Figure 1 est une vue schématique de dessus d'un module à sac gonflable, prévu pour être monté sur un des côtés d'un siège avant d'un véhicule automobile.
- La Figure 2 est une vue en coupe, à plus grande échelle, suivant la ligne II-II de la Figure 1, illustrant plus particulièrement le montage du module dans son logement de réception avec les moyens de l'invention.
- Les Figures 3 et 4 illustrent, également en coupe transversale, deux autres modes de réalisation du dispositif considéré.

On a repris sur ces diverses figures des chiffres de référence identiques de l'une à l'autre pour désigner les mêmes éléments du dispositif.

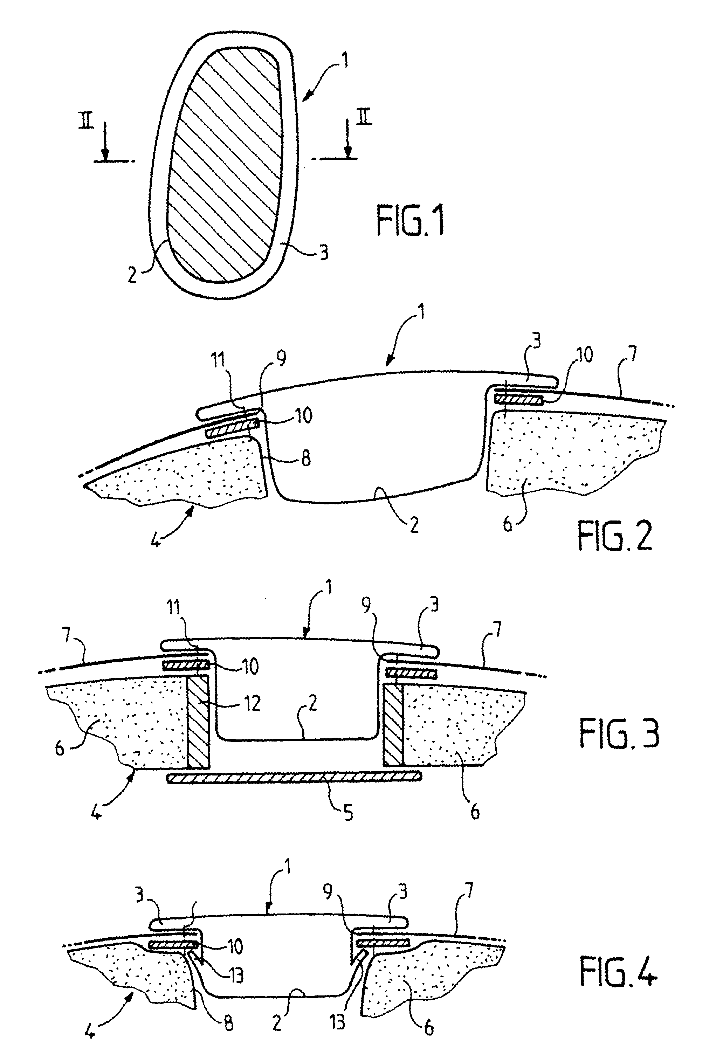

Sur la Figure 1, la référence 1 désigne de façon générale un module à sac gonflable pour véhicule automobile, un tel ensemble comprenant une enveloppe normalement repliée sur elle-même, un élément sensible, notamment à une décélération extrêmement brutale du véhicule consécutive à un choc violent reçu par celui-ci et une source d'air ou de gaz sous pression permettant, après franchissement d'un seuil donné par l'élément sensible, de gonfler brutalement le sac pour former un coussin pneumatique de protection, tous ces moyens étant en eux-mêmes bien connus dans la technique et n'étant pas décrits en détail ici.

Sur la Figure 1 est seulement schématiquement représentée l'enveloppe externe 2 du module 1 qui entoure l'ensemble des éléments constituant celui-ci, cette enveloppe étant prolongée à sa partie supérieure, comme on le voit plus particulièrement sur la vue en coupe de la Figure 2, par une collerette externe 3 qui s'étend selon toute la périphérie du module.

Sur la Figure 2, la référence 4 désigne une partie du dossier d'un siège avant du véhicule, ce siège étant réservé selon le cas au conducteur ou au passager, étant entendu que le dispositif selon l'invention peut équiper uniquement le côté latéral du siège du conducteur, ou bien être prévu en double, sur l'un et l'autre des deux sièges avant.

Le dossier 4, dans son montant latéral partiellement illustré sur les Figures 2 à 4, comporte une armature interne rigide, non représentée sur les Figures 2 et 4 mais schématisée en 5 sur la Figure 3, cette armature, qui confère au dossier la tenue mécanique indispensable étant associée à et entourée par une épaisseur appropriée d'un matériau souple, constituant une matelassure 6, conférant au dossier du siège un confort approprié pour l'usager.

Cette matelassure 6 est recouverte vers l'extérieur du dossier 4 par une coiffe 7 constituant un habillage externe pour ce dossier, cette coiffe étant solidarisée avec la matelassure 6 par tout moyen usuel, notamment par couture ou collage.

Dans l'épaisseur de la matelassure 6, sur le côté du montant latéral du siège, est ménagé un logement 8 ouvert vers l'extérieur, permettant de recevoir le module 1 à travers une ouverture 9 préalablement découpée dans la coiffe 7, le profil de ce logement étant déterminé par construction de sorte que le module 1 s'y adapte étroitement, avec son enveloppe externe 2 pratiquement au contact de la surface interne du logement, aux jeux de montage près, la collerette 3 du module venant s'appuyer sur l'extérieur de la coiffe 7, au-delà de son ouverture 9.

Selon l'invention, le module 1 s'appuie sur la matelassure 6 par l'intermédiaire d'une couronne 10, en forme de bride, qui est montée sous le bord de la coiffe entourant la périphérie du logement 8, cette couronne étant fixée à la coiffe 7 par tout moyen de liaison approprié, notamment par une couture 11 comme schématisé sur les figures, ou encore par agrafage au moyen de clips ou analogues, par soudure, rivetage etc...

La couronne 10 réalise ainsi un élément de support rigide pour l'appui de la collerette 3 sur la matelassure 6, et à cet effet doit présenter une rigidité propre suffisante. Selon le cas, cette couronne peut être fabriquée à l'aide d'un carton rigide, le cas échéant muni d'une armature de raidissement interne, ou bien être constituée sous la forme d'une pièce plate en matière plastique.

Par ailleurs, la couronne 10 présente une largeur appropriée, correspondant au moins à celle de la collerette 3 du module 1, de telle sorte que, lorsque ce module est mis en place dans son logement 8, l'appui de la collerette sur la couronne rende pratiquement impossible de glisser ou d'introduire vers le logement 8 un objet quelconque qui risquerait de gêner ultérieurement le fonctionnement du sac gonflable, voire même seulement à un tiers d'y introduire ses doigts par inadvertance, puisque la collerette est en contact avec la coiffe qui est elle-même fixée sur la couronne.

En variante et comme illustré sur la Figure 3, on peut parfaire encore le montage du module 1 dans son logement 8, pour améliorer le calage du premier et éviter toute intrusion dans le second, en disposant sous la couronne de support 10 en forme de bride, à l'intérieur de ce logement, une bague intermédiaire 12 placée entre cette collerette et l'armature intérieure 5 du siège, qui transmet les efforts d'appui de la collerette 3 à cette dernière.

Selon une autre variante, illustrée sur la Figure 4, le module 1 peut lui-même comporter dans sa surface latérale des ergots 13, en saillie vers l'extérieur et qui viennent se loger sous la couronne 10, en plaquant la couronne et la coiffe sur la collerette 3, la distance entre l'extrémité des ergots 13 et la face interne de la collerette 3 étant égale, au jeu de montage près, à l'épaisseur cumulée de la couronne et de la coiffe : il est ainsi impossible de passer le doigt entre la collerette et la coiffe pour accéder au logement 8.

On réalise ainsi un dispositif de montage pour un module à sac gonflable dans le côté latéral du dossier d'un siège avant d'un véhicule automobile, de conception particulièrement simple et qui présente les avantages d'être peu coûteux, de se prêter à une fabrication en série ne présentant aucune difficulté et surtout qui n'a pas d'incidence directe sur la structure et la réalisation du garnissage du siège, à partir du moment où celui-ci comporte seulement un logement ouvert de réception de ce module.

## Revendications

1. Dispositif de montage d'un module à sac gonflable (1), notamment dans le montant latéral (4) du dossier d'un siège avant d'un véhicule automobile, à l'intérieur d'un logement de réception ouvert (8) ménagé dans une épaisseur de matelassure (6) de ce dossier, cette matelassure étant recouverte d'une coiffe externe de protection (7), le logement communiquant avec l'extérieur du dossier par une ouverture (9) ménagée dans la coiffe, ce dispositif comportant une couronne de support (10) en forme de bride, entourant le logement de réception (8) et apte à être montée sous la coiffe (7), qui est solidarisée avec la couronne de support (10) par des moyens de liaison appropriés, le module (1) comportant une collerette externe (3) **caractérisé en ce que** ladite collerette externe vient directement s'appliquer contre la couronne (10) en emprisonnant la coiffe (7) au droit de son ouverture (9).

2. Dispositif selon la revendication 1, **caractérisé en ce que** les moyens de liaison (11) entre la coiffe et la couronne de support sont réalisés sous la forme d'une couture, d'un agrafage par clips ou éléments de jonction analogues, par soudure, par vissage ou équivalents.

3. Dispositif selon l'une des revendications 1 ou 2, **caractérisé en ce que** le matériau de la couronne (10) est réalisé en carton comprenant ou non un élément de raidissement interne améliorant sa rigidité, ou encore sous la forme d'une pièce en matière plastique.

4. Dispositif selon l'une quelconque des revendications 1 à 3, **caractérisé en ce qu'**il comporte sous la couronne (10) en forme de bride, à l'intérieur du logement (8), dans la paroi latérale de celui-ci, une bague (12) jouant le rôle d'une cale d'appui, placée dans la matelassure (6) entre la couronne et l'armature (5) du dossier (4) du siège.

5. Dispositif selon l'une quelconque des revendications 1 à 3, **caractérisé en ce que** le module (1) comporte dans sa surface latérale des ergots (13) en saillie vers l'extérieur, propres à venir se disposer sous la couronne (10) en forme de bride.

6. Dispositif selon la revendication 5, **caractérisé en ce que** la distance entre l'extrémité des ergots (13) et la face interne de la collerette (3) est égale, au jeu de montage près, à l'épaisseur cumulée de la couronne (10) et de la coiffe (7) afin de plaquer celles-ci sur la collerette (3).

## Claims

1. Device for installing an inflatable bag module (1), in particular in the lateral upright (4) of the backrest of a front seat of a motor vehicle, inside an open cavity (8) created in a thickness of padding (6) of this backrest, this padding being covered by an external protective cap (7), the cavity communicating with the outside of the backrest via an opening (9) created in the cap, this device comprising a support ring (10) in the form of a flange, surrounding the cavity (8) and able to be installed under the cap (7) which is made one with the support ring (10) by appropriate linking means, the module (1) comprising an external collar (3), **characterized in that** the said external collar rests directly against the ring (10), confining the cap (7) around its opening (9).

2. Device according to claim 1, **characterized in that** the linking means (11) between the cap and the support ring are realized in the form of a seam, a fastening by clips or analogous joining elements, by welding, by screwing or equivalent means.

3. Device according to one of claims 1 or 2, **characterized in that** the material of the ring (10) is made of cardboard containing or not an internal stiffening element improving its rigidity, or else in the form of a piece made of plastic material.

4. Device according to any one of claims 1 to 3, **characterized in that** it comprises, under the ring (10) in the form of a flange, inside the cavity (8), in the lateral side of same, a bush (12) acting as a support block, placed in the padding (6) between the ring and the frame (5) of the backrest (4) of the seat.

5. Device according to any one of claims 1 to 3, **characterized in that** the module (1) comprises in its lateral surface outwardly-projecting stubs (13), suitable for being installed under the ring (10) in the form of a flange.

6. Device according to claim 5, **characterized in that** the distance between the extremity of the stubs (13) and the internal face of the collar (3) is equal, the installation clearance apart, to the cumulative thickness of the ring (10) and of the cap (7) in order to plate these onto the collar (3).

## Patentansprüche

1. Vorrichtung zur Montage eines Airbagmoduls (1) insbesondere in der Seitensäule (4) der Rückenlehne eines Vordersitzes eines Kraftfahrzeugs, im Inneren eines offenen Aufnahmesitzes (8), der in einer Dicke der Polsterung (6) dieser Rückenlehne ausgebildet ist, wobei diese Polsterung abgedeckt ist mit einem äußeren Schutzbezug (7), diese Vorrichtung einen Tragkranz (10) in Form eines Flansches aufweist, der den Aufnahmesitz (8) umgibt und unter dem Bezug (7) montiert werden kann, wobei der Bezug mit dem Tragkranz (10) durch geeignete Verbindungsmittel fest verbunden ist und das Modul (1) einen Außenkragen (3) aufweist, **dadurch gekennzeichnet, daß** der Außenkragen direkt gegen den Kranz (10) anliegt, und daher den Bezug (7) im Bereich seiner Öffnung (9) einklemmt.

2. Vorrichtung nach Anspruch 1, **dadurch gekennzeichnet, daß** die Verbindungsmittel (11) zwischen dem Bezug und dem Tragkranz in Form einer Naht, einer Anklammerung durch Clips oder entsprechende Verbindungselemente, durch Schweißen, Schrauben oder Äquivalente realisiert sind.

3. Vorrichtung nach einem der Ansprüche 1 oder 2, **dadurch gekennzeichnet, daß** das Material des Kranzes (10) aus Pappe, gegebenenfalls mit einem seine Steifheit verbessernden inneren Versteifungselement oder auch in Form eines Teils aus Kunststoff hergestellt ist.

4. Vorrichtung nach einem der Ansprüche 1 bis 3, **dadurch gekennzeichnet, daß** sie unter dem in Form eines Flansches ausgebildeten Kranz (10) im Inneren des Aufnahmesitzes (8) in dessen Seitenwand einen Ring (12) aufweist, der die Rolle eines Andruckkeils spielt und der in der Polsterung (6) zwischen dem Kranz und dem Gerüst (7) der Rückenlehne (4) des Sitzes angeordnet ist.

5. Vorrichtung nach einem der Ansprüche 12 bis 3, **dadurch gekennzeichnet, daß** das Modul (1) in seiner Seitenfläche Zapfen (13) aufweist, die nach außen vorspringen und in eine Stellung unter dem als Flansch ausgebildeten Kranz (10) gelangen können.

6. Vorrichtung nach Anspruch 5, **dadurch gekennzeichnet, daß** der Abstand zwischen dem Ende der Zapfen (13) und der Innenseite des Kragens (3) bis auf das Montagespiel gleich der Gesamtdicke von Kranz (10) und Bezug (7) ist, um diese gegen den Kragen (3) zu drükken.
